# EUROPÄISCHE PATENTANMELDUNG

(11) **EP 2 535 739 A1**
(43) Veröffentlichungstag der Anmeldung: **19.12.2012**
(21) Anmeldenummer: 12004513.3
(22) Anmeldetag: 15.06.2012
(51) Int. Cl.: G01S 19/33, G01S 19/02

(54) **Verbesserung der kombinierten Nutzung von verschiedenen Satellitennavigationssystemen**

(30) Priorität: 16.06.2011 DE 102011106589
(71) Anmelder: Astrium GmbH, 82024 Taufkirchen (DE)
(72) Erfinder: Trautenberg, Hans L., Dr., 50823 Köln (DE)
(74) Vertreter: Avenhaus, Beate

(57) **Zusammenfassung**

Die Erfindung betrifft ein Verfahren zum Verbessern der kombinierten Nutzung von verschiedenen Satellitennavigationssystemen, bei dem jeder Satellit (10, 12) der Konstellation eines ersten Satellitennavigationssystems die Uhrmodelle für alle Satelliten (14, 16) der Konstellation eines zweiten Satellitennavigationssystems verbreitet.

## Beschreibung

Die Erfindung betrifft ein Verfahren und eine Anordnung zum Verbessern der kombinierten Nutzung von verschiedenen Satellitennavigationssystemen gemäß Anspruch 1 bzw. 7 und ein Nutzungssystem für eine kombinierte Nutzung von verschiedenen Satellitennavigationssystemen gemäß Anspruch 10.

Durch die kombinierte Nutzung von zwei verschiedenen Satellitennavigationssystemen kann die Genauigkeit, Sichtbarkeit und Verfügbarkeit wesentlich verbessert werden. Allerdings verwenden verschiedene Satellitennavigationssysteme normalerweise unterschiedliche Repräsentationen der internationalen Atomzeitskale TAI (Temps Atomique International), wodurch sich in der Regel die Systemzeiten verschiedener Satellitennavigationssysteme unterscheiden. Beispielsweise verwendet NAVSTAR-GPS bzw. GPS die GPS-Systemzeit, GLONASS dagegen die davon abweichende GLONASS-Systemzeit. Ein weiterer wesentlicher Unterschied besteht in geodätischen Bezugssystemen, die Satellitennavigationssystemen zugrunde liegen. Beispielsweise werden Informationen der Satelliten bei GPS im Weltkoordinatensystem 1984 (WGS 84), bei GLONASS im Sowjet-Geodätischen-System 1985 (SGS 85) gegeben. Für eine kombinierte, insbesondere globale Nutzung von verschiedenen Satellitennavigationssystemen ist daher ein Ausgleich der Unterschiede in den Bezugssystemen und in den Zeitskalen erforderlich, um möglichst exakte Positionierungslösungen zu erhalten.

Die Unterschiede zwischen den Bezugssystemen sind im Vergleich zum Unterschied in den Systemzeiten normalerweise relativ klein. Deshalb ist es für eine kombinierte Nutzung von GPS und dem zukünftigen europäischen Satellitennavigationssystem Galileo nur vorgesehen, ein Model für den Unterschied zwischen den Systemzeiten der beiden Systeme zu verbreiten. Doch selbst nach Berücksichtigung dieses Models ist der Fehler, der durch die unterschiedlichen Zeitsysteme hervorgerufen wird, immer noch bedeutend. Für eine kombinierte Nutzung von GPS und Galileo, aber auch ganz allgemein von unterschiedlichen Satellitennavigationssystemen zur Erzeilung einer möglichst exakten Positionsbestimmung ist es demnach wichtig, diesen Fehler zu reduzieren.

Aufgabe der vorliegenden Erfindung ist es daher, die kombinierte Nutzung von verschiedenen Satellitennavigationssystemen zu verbessern.

Diese Aufgabe wird durch ein Verfahren und eine Anordnung zum Verbessern der kombinierten Nutzung von verschiedenen Satellitennavigationssystemen mit den Merkmalen von Anspruch 1 bzw. 7 und ein Nutzungssystem für eine kombinierte Nutzung von verschiedenen Satellitennavigationssystemen mit den Merkmalen von Anspruch 10 gelöst. Weitere Ausgestaltungen der Erfindung sind Gegenstand der abhängigen Ansprüche.

Die Erfindung baut auf dem folgenden Gedanken auf: für die kombinierte Nutzung von zwei verschiedenen Satellitennavigationssystemen wäre es optimal, wenn jedes Satellitennavigationssystem die Ephemeriden und Uhrmodelle für die Satelliten des anderen Systems in seinem eigenen Bezugssystem bestimmen und verbreiten würde, um die Genauigkeit einer Positionslösung bei einer kombinierten Nutzung von verschiedenen Satellitennavigationssystemen wie beispielsweise GPS und Galileo zu steigern. Da bei erträglichen Längen von Zeitintervallen für die Übertragung der Information ein Satellit nicht die Information für die gesamte Konstellation übertragen kann, könnte diese Information aufgeteilt und über verschiedene Satelliten verteilt werden. Dies würde jedoch dazu führen, dass es nicht mehr ausreicht, Information von nur einem Satelliten der eigenen Konstellation zu empfangen, wenn man Satellitennavigationssysteme kombiniert nutzen will. Daher schlägt die Erfindung vor, dass jeder Satellit der Konstellation eines Satellitennavigationssystems nur die Uhrmodelle für alle Satelliten der Konstellation eines anderen Satellitennavigationssystems verbreitet, Orbitmodelle jedoch nicht überträgt, da davon ausgegangen wird, dass die Bezugssysteme der Satellitennavigationssysteme so gut miteinander übereinstimmen, dass sie für die gewünschte Genauigkeit als identisch angenommen werden können. Durch die Reduktion der Verbreitung von Information auf die Uhrmodelle ist eine Übertragung der Information für die jeweils andere Konstellation über jeden einzelnen Satelliten der eigenen Konstellation möglich.

Gemäß einer Ausführungsform betrifft die Erfindung Verfahren zum Verbessern der kombinierten Nutzung von verschiedenen Satellitennavigationssystemen, bei dem jeder Satellit der Konstellation eines ersten Satellitennavigationssystems die Uhrmodelle für alle Satelliten der Konstellation eines zweiten Satellitennavigationssystems verbreitet.

Ferner kann jeder Satellit der Konstellation des zweiten Satellitennavigationssystems die Uhrmodelle für alle Satelliten der Konstellation der ersten Satellitennavigationssystems verbreiten.

Insbesondere ist das erste Satellitennavigationssystem Galileo und das zweite Satellitennavigationssystem NAVSTAR-GPS.

Die Verbreitung der Uhrmodelle erfolgt insbesondere mit Navigationssignalen des ersten bzw. zweiten Satellitennavigationssystems in vorgegebenen Zeitintervallen.

Die Verbreitung der Uhrmodelle kann von mindestens einer Kontrollstation des Bodensegments des jeweiligen Satellitennavigationssystems kontrolliert werden.

Ferner können die Kontrollstationen von einer Zentrale gesteuert werden, welche die Verbreitung der Uhrmodelle über die Kontrollstationen koordiniert.

Die Erfindung betrifft in einer weiteren Ausführungsform eine Anordnung zum Verbessern der kombinierten Nutzung von verschiedenen Satellitennavigationssystemen mit einem Verfahren nach einem der vorhergehenden Ansprüche, bei dem jeder Satellit der Konstellation eines ersten Satellitennavigationssystems die Uhrmodelle für alle Satelliten der Konstellation eines zweiten Satellitennavigationssystems verbreitet.

Die Anordnung kann mindestens eine Kontrollstation des Bodensegments des jeweiligen Satellitennavigationssystems aufweisen, wobei eine Kontrollstation zur Kontrolle der Verbreitung von Uhrmodellen ausgebildet ist.

Die Anordnung kann ferner eine Zentrale aufweisen, die zur Steuerung der Kontrollstationen und zur Koordination der Verbreitung der Uhrmodelle über die Kontrollstationen ausgebildet ist.

Eine weitere Ausführungsform der Erfindung betrifft ein Nutzungssystem für eine kombinierte Nutzung von verschiedenen Satellitennavigationssystemen, wobei mit einem Verfahren nach der Erfindung und wie oben beschrieben jeder Satellit der Konstellation eines ersten Satellitennavigationssystems die Uhrmodelle für alle Satelliten der Konstellation eines zweiten Satellitennavigationssystems verbreitet und das Nutzungssystem ausgebildet ist
● zum Empfangen von Navigationssignalen der Satelliten des ersten und zweiten Satellitennavigationssystems und
● zum Auswerten der Navigationsinformationen, die in den empfangenen Navigationssignalen der Satelliten des ersten und zweiten Satellitennavigationssystems enthalten sind, unter Berücksichtigung der Uhrmodelle.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in
Fig. 1 ein Ausführungsbeispiel einer Anordnung mit einem ersten und einem zweiten Satellitennavigationssystem und Einheiten der Bodensegmente der Satellitennavigationssysteme zur Steuerung und Koordinierung der Verbreitung von Uhrmodellen der Satelliten; und

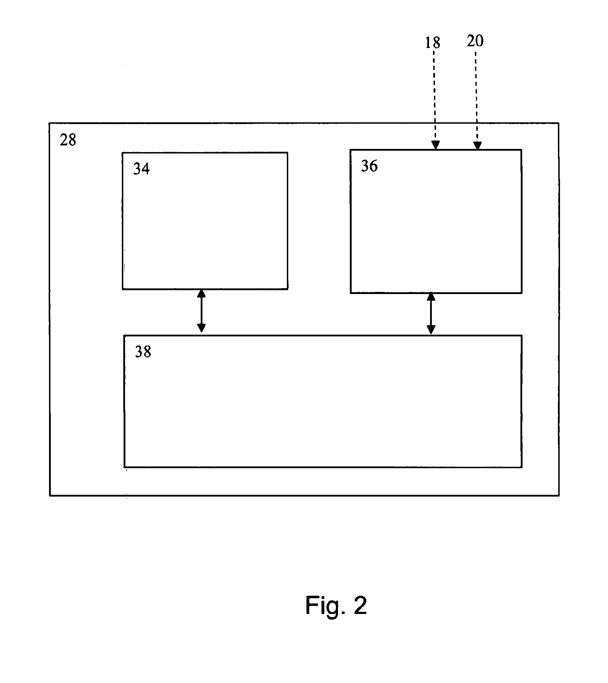

Fig. 2 ein Ausführungsbeispiel eines Nutzungssystems zur kombinierten Nutzung von zwei Satellitennavigationssystemen.

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht als die Erfindung einschränkend zu verstehen.

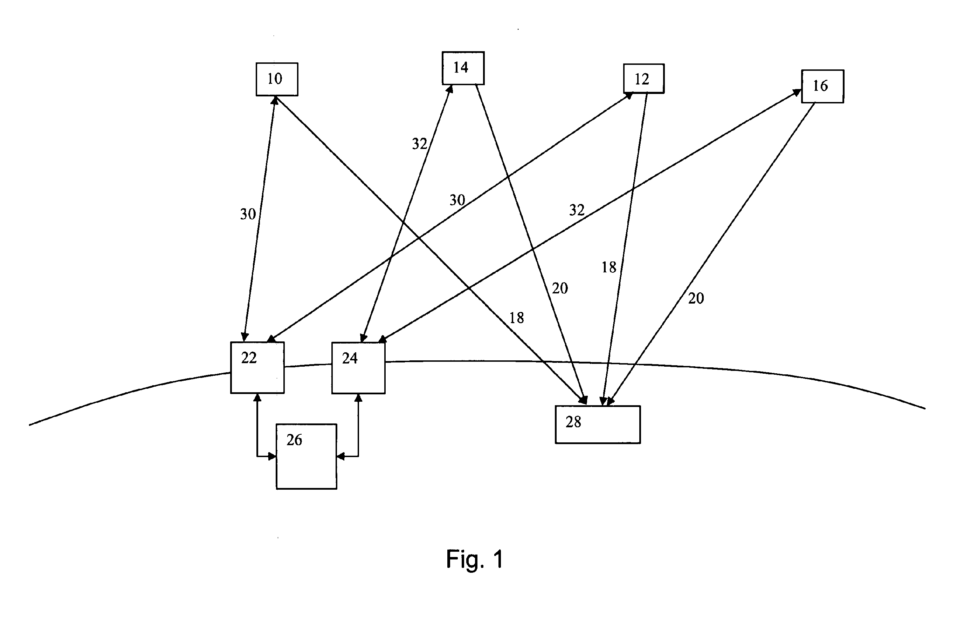

Fig. 1 zeigt eine Konstellation mit mehreren Satelliten 10, 12, 14 und 16 eines ersten und zweiten Satellitennavigationssystems, beispielsweise von NAVSTAR-GPS und Galileo. Die Satelliten 10 und 12 gehören hierbei zum ersten, die Satelliten 14 und 16 zum zweiten Satellitennavigationssystem.

Eine Kontrollstation 22 des Bodensegments des ersten Satellitennavigationssystems kann über Kommunikationsverbindungen 30 mit den Satelliten 10 und 12 kommunizieren. Ebenso kann eine Kontrollstation 24 des Bodensegments des zweiten Satellitennavigationssystems über Kommunikationsverbindungen 32 mit den Satelliten 14 und 16 kommunizieren. Die beiden Kontrollstationen 22 und 24 sind mit einer Zentrale 26 kommunikationsmäßig verbunden. Die Zentrale 26 steuert nicht nur die Kontrollstationen 22 und 24, insbesondere deren Kommunikation mit den jeweiligen Satelliten, sondern kann auch die Verbreitung von Uhrmodellen über die Kontrollstationen 22 und 24 koordinieren. Prinzipiell kann die Verbreitung der Uhrmodelle aber auch ohne eine derartige Koordinierung erfolgen.

Um einem Nutzungssystem 28 eine verbesserte kombinierte Nutzung der von den Satelliten 10, 12, 14 und 16 der beiden Satellitennavigationssysteme ausgestrahlten Navigationssignale 18 und 20 zu ermöglichen, werden nach der Erfindung die Uhrmodelle aller Satelliten eines Satellitennavigationssystems von jedem Satelliten des anderen Satellitennavigationssystems verbreitet, insbesondere zusammen mit Navigationssignalen, beispielsweise eingebettet in die Rahmen der Navigationssignale. In der dargestellten Konstellation können also die Uhrmodelle der Satelliten 10 und 12 des ersten Satellitennavigationssystems von den Satelliten 14 und 16 des zweiten Satellitennavigationssystems verbreitet werden. Umgekehrt kann dies selbstverständlich genauso erfolgen. Ebenso können grundsätzlich die Satelliten beider Satellitennavigationssysteme die Uhrmodelle der Satelliten des jeweils anderen Satellitennavigationssystems übertragen. Die Verbreitung der Uhrmodelle ermöglicht es dem Nutzungssystem 28, die Navigationssignale aller Satelliten unter Berücksichtigung der verbreiteten und mit den Navigationssignalen empfangenen Uhrmodellen vorteilhaft zu nutzen.

Wie bereits oben erwähnt, kann die Zentrale 28 die Verbreitung der Uhrmodelle koordinieren, indem sie beispielsweise von den Bodensegmenten der Satellitennavigationssysteme Informationen zu den Uhren der Satelliten und den Uhrmodellen erhält und die von ihr gesteuerten Kontrollstationen 22 und 24 derart kontrolliert, dass diese die von ihnen jeweils gesteuerten Satelliten 10, 12 bzw. 14, 16 zur Verbreitung der von der Zentrale vorgegebenen Uhrmodelle ansteuern. Somit kann sichergestellt werden, dass möglichst aktuelle Uhrmodelle von den Satelliten verbreitet werden. Beispielsweise kann die Zentrale 28 vom Bodensegment des ersten Satellitennavigationssystems kontinuierlich, periodisch oder bei Änderungen Informationen zu den Uhrmodellen der Satelliten 10 und 12 erhalten und gemäß den erhaltenen Informationen aktuelle Uhrmodelle an die Kontrollstation 24 übermitteln und diese anweisen, die aktuellen Uhrmodelle an die Satelliten 14 und 16 über die Kommunikationsverbindungen 32 zu übertragen, damit sie mit den von den Satelliten 14 und 16 ausgestrahlten Navigationssignalen 20 verbreitet werden. Diese Art der Koordinierung über das Bodensegment ist aber nicht unbedingt erforderlich.

Fig. 21 zeigt ein Blockschaltbild eines Nutzungssystems 28, das für die kombinierte Nutzung von zwei verschiedenen Navigationssystemen ausgebildet ist.

Hierzu weist das Nutzungssystem 28 eine Empfangseinheit 36 auf, welche die Navigationssignale 18 und 20 vom ersten und zweiten Satellitennavigationssystem, wie in Fig. 1 gezeigt, empfangen kann. Die Empfangseinheit 36 weist eine Antenne, die auf den Empfang der typischerweise in unterschiedlichen Frequenzbereichen übermittelten Signale 18 und 20 eingestellt ist, und Hochfrequenzeinheiten zum Verstärken, Filtern und Mischen der empfangenen Signale 18 und 20 auf. Ferner enthält sie einen Signalprozessor zum Korrelieren und Dekodieren der Signale 18 und 20. Die Empfangseinheit 36 gibt die in den empfangenen Signalen 18 und 20 enthaltenen Informationen an einen Prozessor 38 zur Verarbeitung aus. Der Prozessor 38 ist derart eingerichtet, dass er anhand der erhaltenen Informationen die aktuelle Position des Nutzungssystems 28 ermitteln und über eine Anzeige 34 darstellen kann. Der Prozessor 38 ist hierzu durch eine entsprechende Firmware derart konfiguriert, dass er anhand der von den Satelliten mit den Signalen 18 und 20 übermittelten Daten die Position, Zeit, etc. berechnet. Bei der Berechnung verwendet er die Daten sowohl der Satelliten 10, 12 des ersten Satellitennavigationssystems als auch der Satelliten 14 und 16 des zweiten Satellitennavigationssystems. Hierbei wird bei den Orbitmodellen des ersten und zweiten Satellitennavigationssystems davon ausgegangen, dass die Bezugssysteme so gut miteinander übereinstimmen, dass sie für eine gewünschte Genauigkeit als identisch angenommen werden können. Bei der kombinierten Verwendung der Daten der beiden Satellitennavigationssysteme berücksichtigt der Prozessor dagegen die in den Daten enthaltenen Uhrmodelle der Satelliten der jeweiligen Satellitennavigationssysteme.

Mit der vorliegenden Erfindung kann die kombinierte Nutzung von verschiedenen Satellitennavigationssystemen bei vertretbarem technischen Aufwand verbessert werden.

### BEZUGSZEICHEN

- 10, 12: Satellit eines ersten Satellitennavigationssystems
- 14, 16: Satellit eines zweiten Satellitennavigationssystems
- 18: Navigationssignale von Satelliten 10, 12 des ersten Satellitennavigationssystems
- 20: Navigationssignale von Satelliten 14, 16 des zweiten Satellitennavigationssystems
- 22: Kontrollstation des Bodensegments des ersten Satellitennavigationssystems
- 24: Kontrollstation des Bodensegments des zweiten Satellitennavigationssystems
- 26: Zentrale zur Koordination der Verbreitung von Uhrmodellen über die Kontrollstationen 22, 24
- 28: Nutzungssystem zur kombinierten des ersten und zweiten Satellitennavigationssystems
- 30: Kommunikationsverbindung zwischen der Kontrollstation 22 des Bodensegments des ersten Satellitennavigationssystems und den Satelliten 10, 12
- 32: Kommunikationsverbindung zwischen der Kontrollstation 24 des Bodensegments des zweiten Satellitennavigationssystems und den Satelliten 14, 16
- 34: Anzeige
- 36: Empfangseinheit für Navigationssignale
- 38: Prozessor

## Patentansprüche

1. Verfahren zum Verbessern der kombinierten Nutzung von verschiedenen Satellitennavigationssystemen, bei dem jeder Satellit (10, 12) der Konstellation eines ersten Satellitennavigationssystems die Uhrmodelle für alle Satelliten (14, 16) der Konstellation eines zweiten Satellitennavigationssystems verbreitet.

2. Verfahren nach Anspruch 1, **dadurch gekennzeichnet, dass** ferner jeder Satellit (14, 16) der Konstellation des zweiten Satellitennavigationssystems die Uhrmodelle für alle Satelliten (10, 12) der Konstellation der ersten Satellitennavigationssystems verbreitet.

3. Verfahren nach Anspruch 1 oder 2, **dadurch gekennzeichnet, dass** das erste Satellitennavigationssystem Galileo und das zweite Satellitennavigationssystem NAVSTAR-GPS ist.

4. Verfahren nach Anspruch 1, 2 oder 3 , **dadurch gekennzeichnet, dass** die Verbreitung der Uhrmodelle mit Navigationssignalen (18, 20) des ersten bzw. zweiten Satellitennavigationssystems in vorgegebenen Zeitintervallen erfolgt.

5. Verfahren nach einem der vorhergehenden Ansprüche, **dadurch gekennzeichnet, dass**
die Verbreitung der Uhrmodelle von mindestens einer Kontrollstation (22, 24) des Bodensegments des jeweiligen Satellitennavigationssystems kontrolliert wird.

6. Verfahren nach Anspruch 5, **dadurch gekennzeichnet, dass** die Kontrollstationen (22, 24) von einer Zentrale (26) gesteuert werden, welche die Verbreitung der Uhrmodelle über die Kontrollstationen (22, 24) koordiniert.

7. Anordnung zum Verbessern der kombinierten Nutzung von verschiedenen Satellitennavigationssystemen mit einem Verfahren nach einem der vorhergehenden Ansprüche, bei dem jeder Satellit (10, 12) der Konstellation eines ersten Satellitennavigationssystems die Uhrmodelle für alle Satelliten (14, 16) der Konstellation eines zweiten Satellitennavigationssystems verbreitet.

8. Anordnung nach Anspruch 7, **dadurch gekennzeichnet, dass** die Anordnung mindestens eine Kontrollstation (22, 24) des Bodensegments des jeweiligen Satellitennavigationssystems aufweist, wobei eine Kontrollstation (22, 24) zur Kontrolle der Verbreitung von Uhrmodellen ausgebildet ist.

9. Anordnung nach Anspruch 8,
ferner **gekennzeichnet durch** eine Zentrale (26), die zur Steuerung der Kontrollstationen (22, 24) und zur Koordination der Verbreitung der Uhrmodelle über die Kontrollstationen (22, 24) ausgebildet ist.

10. Nutzungssystem (28) für eine kombinierte Nutzung von verschiedenen Satellitennavigationssystemen, wobei mit einem Verfahren nach einem der Ansprüche 1 bis 6 jeder Satellit (10, 12) der Konstellation eines ersten Satellitennavigationssystems die Uhrmodelle für alle Satelliten (14, 16) der Konstellation eines zweiten Satellitennavigationssystems verbreitet und das Nutzungssystem ausgebildet ist
● zum Empfangen von Navigationssignalen (18, 20) der Satelliten (10, 12, 14, 16) des ersten und zweiten Satellitennavigationssystems und
● zum Auswerten der Navigationsinformationen, die in den empfangenen Navigationssignalen der Satelliten des ersten und zweiten Satellitennavigationssystems enthalten sind, unter Berücksichtigung der Uhrmodelle.
